# EUROPEAN PATENT SPECIFICATION

(11) **EP 3 460 285 B1**
(45) Date of publication and mention of the grant of the patent: **21.10.2020**
(21) Application number: 16902475.9
(22) Date of filing: 01.12.2016
(51) Int. Cl.: F16F 9/05, B60G 11/27, B61F 5/10, F16F 1/36, F16F 3/093, F16F 15/023, F16F 15/04, B60G 11/28, B60G 11/62

(54) **AIR SUSPENSION DEVICE**
LUFTFEDERUNGSVORRICHTUNG
DISPOSITIF DE SUSPENSION PNEUMATIQUE

(30) Priority: 20.05.2016 JP 2016101349
(43) Date of publication of application: 27.03.2019
(73) Proprietor: Bridgestone Corporation, Tokyo 104-8340 (JP)
(72) Inventor: TANAKA, Satoshi, Tokyo 104-8340 (JP)
(74) Representative: Oxley, Robin John George
(86) International application number: PCT/JP2016/085733
(87) International publication number: WO 2017/199457

(56) References cited:
- EP-A1- 2 960 541
- WO-A1-2009/107679
- WO-A1-2014/129020
- WO-A1-2015/053231
- CN-U- 201 436 423
- CN-U- 201 437 362
- CN-Y- 201 326 677
- JP-A- 2011 002 000
- JP-A- 2012 072 825
- US-A1- 2009 039 574
- US-A1- 2011 233 832

## Description

### [Technical Field]

The present invention relates to an air suspension device disposed between a vehicle body and a truck of, for instance, a railroad vehicle.

### [Background Art]

An air suspension device that includes an upper surface plate, a lower surface plate, and a tubular membrane member, opposite end openings of which are connected to the members and in which a pressurized gas of atmospheric pressure or higher is sealed, and is used for vehicles is known.

As this type of air suspension device, as disclosed in, for instance, Patent Document 1 below, a constitution in which a discoidal holder is provided below a lower surface plate and an elastic body is disposed between the holder and the lower surface plate is known.

### [Citation List]

### [Patent Document]

[Patent Document 1]
Japanese Unexamined Patent Application, First Publication No. 2012-72825 Reference is also made to EP 2960541, JP 2011-002000, CN 201 436 423 and CN 201 326 677 Y , which disclose an air suspension device according to the preamble of Claim 1.

### [Summary of Invention]

### [Technical Problem]

In a railroad vehicle or the like in which the conventional air suspension device 8314799-1-RCOWELLWATTS is disposed, the vehicle sometimes continues traveling even after the tubular membrane member blows out. In this case, to suppress vibrations of the vehicle in a vertical direction, it is conceivable to increase a height of the elastic body or form the elastic body using a soft rubber material, thereby reducing rigidity of the elastic body in the vertical direction.

However, when the rigidity of the elastic body in the vertical direction is reduced in this way, there is a possibility of rigidity in a horizontal direction also being reduced, the lower surface plate and the holder being relatively easily displaced in the horizontal direction, and a position of the vehicle in the horizontal direction relative to the truck becoming unstable.

The present invention was made in view of these circumstances, and an object thereof is to provide an air suspension device capable of reducing rigidity in a vertical direction while suppressing a reduction in rigidity in a horizontal direction.

### [Solution to Problem]

To solve the problem, an air suspension device of the present invention includes: an air suspension body in which opposite end openings of a tubular membrane member in which a gas is sealed are connected to an upper surface plate and a lower surface plate; an intermediate member disposed below the lower surface plate and having a vertically extending through-hole formed in the center thereof; a body rubber part which elastically connects the lower surface plate and the intermediate member; a support member disposed below the intermediate member and provided with an upwardly protruding inner protrusion in the center thereof; and an elastic body which elastically connects the intermediate member and the support member. An inner circumferential surface of the through-hole and an outer circumferential surface of the inner protrusion face each other across the elastic body. A recess that is recessed upward is formed in a portion within a lower surface of the body rubber part, the portion facing an upper end of the inner protrusion through the through-hole; and an inner diameter of the recess is larger than an outer diameter of the inner protrusion.

### [Effects of Invention]

According to the present invention, rigidity in a vertical direction can be reduced while suppressing a reduction in rigidity in a horizontal direction of the air suspension device.

### [Brief Description of Drawings]

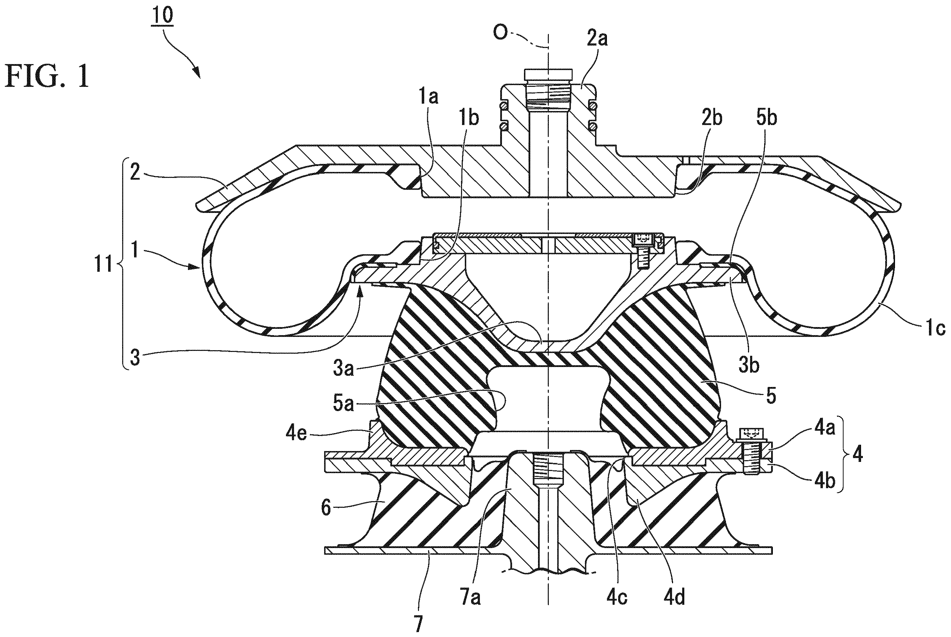

Fig. 1 is a longitudinal sectional view of an air suspension device according to an embodiment of the present invention.

### [Description of Embodiments]

Hereinafter, a constitution of an air suspension device 10 according to the present embodiment will be described with reference to Fig. 1.

As shown in Fig. 1, the air suspension device 10 is disposed between a vehicle body (not shown) and a truck (not shown) of, for instance, a railroad vehicle, and includes an air suspension body 11 having a tubular membrane member 1, opposite end openings 1a and 1b of which are respectively connected to an upper surface plate 2 and a lower surface plate 3 and in which a pressurized gas of atmospheric pressure or higher is sealed, an intermediate member 4 that is disposed below the lower surface plate 3, a body rubber part 5 that elastically connects the lower surface plate 3 and the intermediate member 4, a support member 7 that is disposed below the intermediate member 4 , and an elastic body 6 that elastically connects the intermediate member 4 and the support member 7.

Here, in the present embodiment, a direction that extends along a central axis O of the tubular membrane member 1 is called a vertical direction, and in a top view from the direction of the central axis O, a direction perpendicular to the central axis O is called a radial direction, and a direction around the central axis O is called a circumferential direction.

The tubular membrane member 1 has flexibility, and is formed of, for instance, an elastic material, preferably a rubber material. The inside of the tubular membrane member 1 is filled with a gas such as air, and an intermediate portion 1c located between the opposite end openings 1a and 1b bulges outward in the radial direction.

The body rubber part 5 and the elastic body 6 are formed of a rubber material.

The upper surface plate 2 is formed in a disc shape, and is disposed on the same axis as the central axis O. A communication tube part 2a that is disposed on the same axis as the central axis O and extends upward is formed in the center of the upper surface plate 2 in the radial direction. An opening of a lower end of the communication tube part 2a communicates with the inside of the tubular membrane member 1 and, for instance, a gas supplying means (not shown) or an auxiliary tank (not shown) that supplies or exhausts a gas such as air into or from the tubular membrane member 1 is airtightly connected to an opening of an upper end of the communication tube part 2a.

An overhang part 2b that protrudes downward is formed in the center of a lower surface of the upper surface plate 2 in the radial direction. The overhang part 2b is formed in a flat columnar shape, and is disposed on the same axis as the central axis O. The opposite end opening 1a of the tubular membrane member 1 is airtightly fitted onto the overhang part 2b. The upper surface plate 2 is formed of a metal material such as an aluminum alloy.

The lower surface plate 3 is formed in a disc shape in which an outer diameter thereof is smaller than that of the tubular membrane member 1, and is disposed on the same axis as the central axis O. A projection 3a that protrudes downward is formed in the center of the lower surface plate 3 in the radial direction. A flange part 3b that protrudes outward in the radial direction is formed on an outer circumferential surface of the lower surface plate 3.

The body rubber part 5 is vulcanized and adhered to a lower surface of the lower surface plate 3 which ranges from the projection 3a to the flange part 3b. An upper surface and an outer circumferential surface of the flange part 3b are covered with a coating rubber 5b. The coating rubber 5b covers the flange part 3b, thereby inhibiting the tubular membrane member 1 from coming into contact with the flange part 3b and causing scratches or wear on a surface of the tubular membrane member 1.

The body rubber part 5 is formed in a columnar shape, and is disposed on the same axis as the central axis O. A recess 5a that is recessed upward is formed on a lower surface of the body rubber part 5. A lower end of the body rubber part 5 is in contact with the intermediate member 4 from above.

The intermediate member 4 is formed in a disc shape, and is disposed on the same axis as the central axis O. The intermediate member 4 includes an upper member 4a disposed on an upper side thereof, and a lower member 4b disposed on a lower side thereof. A through-hole 4c that integrally passes through the upper member 4a and the lower member 4b in the vertical direction is formed in the center of the intermediate member 4 in the radial direction. An annular body 4e that protrudes upward is formed on an upper surface of the upper member 4a. The annular body 4e is formed in an annular shape whose center is the central axis O, and an inner circumferential surface of the annular body 4e is in contact with an outer circumferential surface of a lower end of the body rubber part 5. In the present embodiment, the intermediate member 4 includes the upper member 4a and the lower member 4b, but the upper member 4a and the lower member 4b may be integrally formed.

A cylindrical outer tube part 4d that protrudes downward is formed on a circumferential edge of the opening in the through-hole 4c of the intermediate member 4. The outer tube part 4d is disposed on the same axis as the central axis O. An inner circumferential surface of the through-hole 4c and an inner circumferential surface of the outer tube part 4d are smoothly continuous with each other without a height difference. An inner diameter of the outer tube part 4d gradually increases downward. An outer diameter of the outer tube part 4d gradually increases upward from a lower end of the outer tube part 4d. Thereby, a thickness of the outer tube part 4d in the radial direction gradually decreases downward. An edge of the opening of the lower end of the outer tube part 4d is formed in a curved shape that protrudes downward, and is disposed inside the elastic body 6. A position of the lower end of the outer tube part 4d in the vertical direction is the same as a position of the middle of the inner protrusion 7a (to be described below) in the vertical direction.

The support member 7 is formed in a disc shape, and is disposed on the same axis as the central axis O. An inner protrusion 7a that protrudes upward is formed in the center of the support member 7 in the radial direction.

The inner protrusion 7a is formed in a columnar shape in which a diameter thereof gradually decreases upward, and is disposed on the same axis as the central axis O. A position of an upper end of the inner protrusion 7a in the vertical direction is the same as a position of the through-hole 4c of the intermediate member 4 in the vertical direction. The elastic body 6 is vulcanized and adhered to an upper surface of the support member 7, and a space between the intermediate member 4 and the support member 7 is filled with the elastic body 6. For this reason, the inner circumferential surface of the through-hole 4c and an outer circumferential surface of an upper end of the inner protrusion 7a face each other across the elastic body 6. Furthermore, the inner protrusion 7a is surrounded by the outer tube part 4d of the intermediate member 4 from the outside in the radial direction, and the inner circumferential surface of the outer tube part 4d and the outer circumferential surface of the inner protrusion 7a face each other across the elastic body 6.

Portions at which the outer circumferential surface of the inner protrusion 7a and the inner circumferential surface of the outer tube part 4d face each other are disposed to be parallel to each other via the elastic body 6. In the shown example, the outer circumferential surface of the inner protrusion 7a and the inner circumferential surface of the outer tube part 4d are disposed to be parallel to each other over a full length in the vertical direction.

The recess 5a of the body rubber part 5 faces the upper end of the inner protrusion 7a of the support member 7 through the through-hole 4c of the intermediate member 4 in the vertical direction. An inner diameter of the recess 5a is larger than an outer diameter of the inner protrusion 7a. The body rubber part 5 and the elastic body 6 are disposed across the intermediate member 4 in series in the vertical direction. A length of the elastic body 6 in the vertical direction is smaller than that of the body rubber part 5 in the vertical direction. The volume of the elastic body 6 is smaller than that of the body rubber part 5.

According to the air suspension device 10 of the present embodiment described above, since the body rubber part 5 and the elastic body 6 are disposed across the intermediate member 4 in series in the vertical direction, when the truck and the vehicle are displaced toward each other in the vertical direction and the entire air suspension device 10 is compressed in the vertical direction, the rigidity of the entire air suspension device 10 in the vertical direction can be reduced, compared to the air suspension device in which only the body rubber part 5 is disposed. Thereby, even when the tubular membrane member 1 blows out, vibrations transmitted from the truck to the vehicle in the vertical direction are easily absorbed.

Since an inner diameter of the recess 5a of the body rubber part 5 is larger than an outer diameter of the inner protrusion 7a of the support member 7, when the entire air suspension device 10 is compressed in the vertical direction, the inner protrusion 7a enters the recess 5a while deforming the elastic body 6. In this way, since the elastic body 6 is easily deformed in the vertical direction, the rigidity of the entire air suspension device 10 in the vertical direction can be reliably reduced in the present embodiment, compared to a case in which the inner protrusion 7a is configured to be unable to enter the recess 5a.

When the truck and the vehicle are relatively displaced in a horizontal direction, the inner circumferential surface of the through-hole 4c of the intermediate member 4 and the outer circumferential surface of the inner protrusion 7a of the support member 7 face each other across the elastic body 6 in the horizontal direction, and thus the elastic body 6 is horizontally interposed between the through-hole 4c and the inner protrusion 7a, and is subjected to compressive deformation. In general, in the case of rubber materials, deformation in the compression direction is smaller than deformation in the shear direction. For this reason, in comparison with a case in which the elastic body 6 is subjected to shear deformation alone without compression deformation when the truck and the vehicle are relatively displaced in the horizontal direction, a deformation amount of the elastic body 6 in the present embodiment is small, and the rigidity of the entire air suspension device 10 in the horizontal direction can be improved.

Since the diameter of the outer circumferential surface of the inner protrusion 7a gradually decreases upward, the elastic body 6 can be subjected to compression deformation in the horizontal direction while escaping upward along the outer circumferential surface of the inner protrusion 7a, and an excessive compressive force is restrained from being applied to the elastic body 6, so that durability of the elastic body 6 can be secured.

Since the inner circumferential surface of the outer tube part 4d of the intermediate member 4 and the outer circumferential surface of the inner protrusion 7a of the support member 7 face each other across the elastic body 6, a volume can be secured at a portion of the elastic body 6 which is horizontally interposed between the intermediate member 4 and the support member 7 and is subjected to compressive deformation. In general, in the case of rubber materials, as a volume of a portion subjected to compressive deformation increases, internal stress applied during the compressive deformation can be dispersed and reduced. Thus, the durability of the elastic body 6 is more easily secured.

Since the portions at which the outer circumferential surface of the inner protrusion 7a and the inner circumferential surface of the outer tube part 4d face each other are disposed to be parallel to each other, a uniform compressive force can be applied to the elastic body 6 over the whole area of the facing portions. Furthermore, the inner circumferential surface of the outer tube part 4d is smoothly continuous with the inner circumferential surface of the through-hole 4c of the intermediate member 4 without a height difference. Thereby, an excessive compressive force is restrained from being locally applied to the elastic body 6, and the durability of the elastic body 6 is more easily secured.

Since the thickness of the outer tube part 4d of the intermediate member 4 in the radial direction gradually decreases downward, the rigidity of the outer tube part 4d in the horizontal direction can be secured while further reducing a volume of the outer tube part 4d, for instance in comparison with a case in which the thickness of the outer tube part 4d is made constant in the vertical direction. When the volume of the outer tube part 4d is reduced, the volume of the elastic body 6 can be increased. Thus, the thickness of the outer tube part 4d in the radial direction gradually decreases downward, and thereby securing the volume of the entire elastic body 6 and securing the rigidity of the outer tube part 4d in the horizontal direction are easily compatible.

The lower end of the outer tube part 4d of the intermediate member 4 is disposed inside the elastic body 6, and the edge of the opening of the lower end of the outer tube part 4d is formed in a projected curved shape. Thus, the excessive compressive force is restrained from being locally applied to the elastic body 6, and the durability of the elastic body 6 is more easily secured.

When the truck and the vehicle are relatively displaced in the horizontal direction, the elastic body 6 is subjected to shear deformation between the intermediate member 4 and the support member 7 in the horizontal direction. Generally, a rubber material is not easily subjected to shear deformation when a height thereof in a vertical direction becomes lower. In the present embodiment, the length of the elastic body 6 in the vertical direction is smaller than that of the body rubber part 5 in the vertical direction, and the shear deformation of the elastic body 6 is suppressed. Thereby, the air suspension device 10 is provided with the elastic body 6, and thereby a reduction in the rigidity of the entire air suspension device 10 in the horizontal direction can be reliably suppressed.

In the present embodiment, the body rubber part 5 and the elastic body 6 are separately formed. For this reason, physical properties or shapes thereof can be appropriately modified according to a request specification.

The technical scope of the present invention is not limited to the above embodiment, and various modification can be added without departing from the spirit and idea of the present invention.

For example, in the embodiment, the recess 5a is formed in the lower surface of the body rubber part 5. However, without being limited thereto, the body rubber part 5 in which the recess 5a is not formed may be adopted.

In the embodiment, it has been described that the length of the elastic body 6 in the vertical direction is smaller than that of the body rubber part 5 in the vertical direction. However, the length of the elastic body 6 may be greater than that of the body rubber part 5.

In the embodiment, it has been described that the diameter of the outer circumferential surface of the inner protrusion 7a of the support member 7 gradually decreases upward. However, without being limited thereto, the support member 7 in which the outer circumferential surface of the inner protrusion 7a is formed approximately in the same diameter in the vertical direction may be adopted.

In the embodiment, the outer tube part 4d that protrudes downward is formed at the intermediate member 4. However, without being limited thereto, the intermediate member 4 in which the outer tube part 4d is not formed may be adopted.

It has been described that the outer tube part 4d is formed such that the thickness thereof in the radial direction gradually decreases downward. However, the thickness of the outer tube part 4d in the radial direction may be uniform in the vertical direction.

In addition, without departing from the spirit and idea of the present invention, the components in the aforementioned embodiment can be appropriately replaced by well-known components, and the aforementioned embodiment or modifications may be appropriately combined.

According to the air suspension device of the present invention, since the body rubber part and the elastic body are disposed across the intermediate member in series in the vertical direction, the rigidity of the entire air suspension device in the vertical direction can be reduced

Furthermore, since the inner circumferential surface of the through-hole of the intermediate member and the outer circumferential surface of the inner protrusion that protrudes upward from the support member face each other across the elastic body in the horizontal direction, when the truck and the vehicle are relatively displaced in the horizontal direction, the elastic body is horizontally interposed between the inner circumferential surface of the through-hole and the outer circumferential surface of the inner protrusion and is subjected to compressive deformation. Thereby, this displacement can be deterred, and the reduction in the rigidity of the entire air suspension device in the horizontal direction can be suppressed.

Here, the recess that is recessed upward is formed in the portion, which faces the upper end of the inner protrusion through the through-hole, within the lower surface of the body rubber part, and the inner diameter of the recess is larger than the outer diameter of the inner protrusion.

In this case, the inner diameter of the recess of the body rubber part is larger than the outer diameter of the inner protrusion of the support member. Thus, when the compressive force in the vertical direction is applied to the entire air suspension device, the inner protrusion can enter the recess, and the rigidity of the entire air suspension device in the vertical direction can be reliably reduced.

The length of the elastic body in the vertical direction may be smaller than that of the body rubber part in the vertical direction.

In this case, since the length of the elastic body in the vertical direction is small, the air suspension device is provided with the elastic body, and thereby the reduction in the rigidity of the entire air suspension device in the horizontal direction can be reliably suppressed.

The outer diameter of the inner protrusion may gradually decreases upward.

In this case, since the outer diameter of the inner protrusion gradually decreases upward, when the truck and the vehicle are relatively displaced in the horizontal direction, the elastic body can be subjected to compression deformation in the horizontal direction while escaping upward along the outer circumferential surface of the inner protrusion, and the excessive compressive force is restrained from being applied to the elastic body, so that the durability of the elastic body can be secured.

The intermediate member may be provided with the outer tube part that protrudes downward from a circumferential edge of the opening of the through-hole and surrounds the inner protrusion from the outside in the radial direction. The inner circumferential surface of the outer tube part and the outer circumferential surface of the inner protrusion may face each other across the elastic body.

In this case, since the inner circumferential surface of the outer tube part that protrudes downward from the intermediate member and the outer circumferential surface of the inner protrusion that protrudes upward from the support member face each other across the elastic body, the volume can be secured at the portion of the elastic body which is horizontally interposed between the intermediate member and the support member and is subjected to compressive deformation. Thus, the excessive compressive force can be restrained from being applied to this portion, and the durability of the elastic body can be improved.

The outer tube part may be formed such that the thickness thereof in the radial direction gradually decreases downward.

In this case, securing the volume of the entire elastic body and securing the rigidity of the outer tube part in the horizontal direction can be made compatible.

### [Industrial Applicability]

According to the present invention, the air suspension device capable of improving the rigidity in the horizontal direction while reducing the rigidity in the vertical direction of the elastic body can be provided.

### [Reference Signs List]

- 1: Tubular membrane member
- 2: Upper surface plate
- 3: Lower surface plate
- 4: Intermediate member
- 4c: Through-hole
- 4d: Outer tube part
- 5: Body rubber part
- 5a: Recess
- 6: Elastic body
- 7: Support member
- 7a: Inner protrusion
- 10: Air suspension device
- 11: Air suspension body

## Claims

1. An air suspension device (10) comprising:
an air suspension body (11) in which opposite end openings of a tubular membrane member (1) in which a gas is sealed are connected to an upper surface plate (2) and a lower surface plate (3);
an intermediate member (4) disposed below the lower surface plate (3) and having a vertically extending through-hole (4c) formed in the center thereof;
a body rubber part (5) which elastically connects the lower surface plate (3) and the intermediate member (4);
a support member (7) disposed below the intermediate member (4) and provided with an upwardly protruding inner protrusion (7a) in the center thereof; and
an elastic body (6) which elastically connects the intermediate member (4) and the support member (7),
wherein an inner circumferential surface of the through-hole (4c) and an outer circumferential surface of the inner protrusion (7a) face each other across the elastic body (6), **characterised in that**
a recess (5a) that is recessed upward is formed in a portion within a lower surface of the body rubber part (5), the portion facing an upper end of the inner protrusion (7a) through the through-hole (4c); and
an inner diameter of the recess is larger than an outer diameter of the inner protrusion (7a).

2. The air suspension device (10) according to claim 1 , wherein a length of the elastic body (6) in a vertical direction is smaller than that of the body rubber part (5) in the vertical direction.

3. The air suspension device (10) according to claim 1 or 2, wherein an outer diameter of the inner protrusion (7a) gradually decreases upward.

4. The air suspension device (10) according to any one of claims 1 to 3, wherein:
the intermediate member (4) is provided with an outer tube part (4d) that protrudes downward from a circumferential edge of an opening of the through-hole (4c) and surrounds the inner protrusion (7a) from the outside in a radial direction, and
an inner circumferential surface of the outer tube part (4d) and the outer circumferential surface of the inner protrusion (7a) face each other across the elastic body (6).

5. The air suspension device (10) according to claim 4, wherein the outer tube part (4d) is formed such that a thickness thereof in the radial direction gradually decreases downward.

## Patentansprüche

1. Luftfederungsvorrichtung (10), die Folgendes umfasst:
einen Luftfederungskörper (11), in dem entgegengesetzte Stirnöffnungen eines röhrenförmigen Membranelements (1), in dem ein Gas verschlossen ist, mit einer oberen Flächenplatte (2) und einer unteren Flächenplatte (3) verbunden sind,
ein Zwischenelement (4), das unterhalb der unteren Flächenplatte (3) angeordnet ist und ein sich in Vertikalrichtung erstreckendes Durchgangsloch (4c) aufweist, das in der Mitte desselben geformt ist,
einen Gummikörperteil (5), der die untere Flächenplatte (3) und das Zwischenelement (4) elastisch verbindet,
ein Stützelement (7), das unterhalb des Zwischenelements (4) bereitgestellt wird und in der Mitte desselben mit einem nach oben vorspringenden inneren Vorsprung (7a) versehen ist, und
einen elastischen Körper (6), der das Zwischenelement (4) und Stützelement (7) elastisch verbindet,
wobei eine innere Umfangsfläche des Durchgangslochs (4c) und eine äußere Umfangsfläche des inneren Vorsprungs (7a) einander über den elastischen Körper (6) gegenüberliegen, **dadurch gekennzeichnet, dass**
eine Aussparung (5a), die nach oben ausgespart ist, in einem Abschnitt innerhalb einer unteren Fläche des Gummikörperteils (5) geformt ist, wobei der Abschnitt einem oberen Ende des inneren Vorsprungs (7a) durch das Durchgangsloch (4c) gegenüberliegt, und
ein Innendurchmesser der Aussparung größer als ein Außendurchmesser des inneren Vorsprungs (7a) ist.

2. Luftfederungsvorrichtung (10) nach Anspruch 1, wobei eine Länge des elastischen Körpers (6) in einer vertikalen Richtung kleiner ist als diejenige des Gummikörperteils (5) in der vertikalen Richtung.

3. Luftfederungsvorrichtung (10) nach Anspruch 1 oder 2, wobei ein Außendurchmesser des inneren Vorsprungs (7a) nach oben allmählich abnimmt.

4. Luftfederungsvorrichtung (10) nach einem der Ansprüche 1 bis 3, wobei:
das Zwischenelement (4) mit einem äußeren Röhrenteil (4d) versehen ist, der von einer umlaufenden Kante einer Öffnung des Durchgangslochs (4c) nach unten vorspringt und den inneren Vorsprung (7a) von der Außenseite in einer radialen Richtung umgibt, und
eine innere Umfangsfläche des äußeren Röhrenteils (4d) und die äußere Umfangsfläche des inneren Vorsprungs (7a) einander über den elastischen Körper (6) gegenüberliegen.

5. Luftfederungsvorrichtung (10) nach Anspruch 4, wobei der äußere Röhrenteil (4d) derart geformt ist, dass eine Dicke desselben in der radialen Richtung nach unten allmählich abnimmt.

## Revendications

1. Dispositif de suspension pneumatique (10), comprenant :
un corps de suspension pneumatique (11) dans lequel des ouvertures d'extrémité opposées d'un élément de membrane tubulaire (1), dans lequel un gaz est scellé, sont connectées à une plaque de surface supérieure (12) et à une plaque de surface inférieure (3) ;
un élément intermédiaire (4) disposé au-dessous de la plaque de surface inférieure (3) et comportant un trou de passage à extension verticale (4c) formé en son centre ;
une partie en caoutchouc du corps (5) connectant de manière élastique la plaque de surface inférieure (3) et l'élément intermédiaire (4) ;
un élément de support (7) disposé au-dessous de l'élément intermédiaire (4) et muni d'une saillie interne débordant vers le haut (7a) en son centre ; et
un corps élastique (6) connectant de manière élastique l'élément intermédiaire (4) et l'élément de support (7) ;
dans lequel une surface circonférentielle interne du trou de passage (4c) et une surface circonférentielle externe de la saillie interne (7a) se font mutuellement face à travers le corps élastique (6) ; **caractérisé en ce que** :
un évidement (5a) évidé vers le haut est formé dans une partie dans une surface inférieure de la partie en caoutchouc du corps (5), la partie faisant face à une extrémité supérieure de la saillie interne (7a) à travers le trou de passage (4c) ; et
un diamètre intérieur de l'évidement est supérieur à un diamètre extérieur de la saillie interne (7a).

2. Dispositif de suspension pneumatique (10) selon la revendication 1, dans lequel une longueur du corps élastique (6) dans la direction verticale est inférieure à celle de la partie de caoutchouc du corps (5) dans la direction verticale.

3. Dispositif de suspension pneumatique (10) selon les revendications 1 ou 2, dans lequel un diamètre extérieur de la saillie interne (7a) se réduit progressivement vers le haut.

4. Dispositif de suspension pneumatique (10) selon l'une quelconque des revendications 1 à 3, dans lequel :
l'élément intermédiaire (4) est muni d'une partie de tube externe (4d) débordant vers le bas à partir d'un bord circonférentiel d'une ouverture du trou de passage (4c) et entourant la saillie interne (7a) à partir de l'extérieur, dans une direction radiale ; et
une surface circonférentielle interne de la partie de tube externe (4d) et la surface circonférentielle externe de la saillie interne (7a) se font mutuellement face à travers le corps élastique (6).

5. Dispositif de suspension pneumatique (10) selon la revendication 4, dans lequel la partie tubulaire externe (4d) est formée de sorte que son épaisseur dans la direction radiale se réduit progressivement vers le bas.
